# EUROPEAN PATENT APPLICATION

(11) **EP 2 219 125 A1**
(43) Date of publication of application: **18.08.2010**
(21) Application number: 09152843.0
(22) Date of filing: 13.02.2009
(51) Int. Cl.: G06F 17/50, G05B 19/18

(54) **Method for designing a tube frame**

(71) Applicant: van Sorgen, Carel Johannes Wilhelm Theodoor, 7101 BN Winterswijk (NL)
(72) Inventor: van Sorgen, Carel Johannes Wilhelm Theodoor, 7101 BN Winterswijk (NL)
(74) Representative: 't Jong, Bastiaan Jacob

(57) **Abstract**

The invention relates to a method for designing a tube frame out of a number of tube parts, the method comprising the steps of:
- providing a selection of predefined tube parts, each tube part having at least one attachment zone;
- selecting a first tube part from the selection of predefined tube parts;
- selecting an attachment zone of the selected tube part;
- selecting a second tube part from the selection of predefined tube parts for connection to the selected attachment zone and connecting said second tube part at the selected attachment zone to the first tube part;
- repeating the steps of selecting an attachment zone of a tube part and selecting a further tube part in order to design a tube frame.

## Description

The invention relates to a method for designing a tube frame out of a number of tube parts. Such a method is in particular suitable to be performed on a computer. General computer programs for designing technical structures are known for a long time. These programs can be vector oriented or solid oriented. Vector oriented design programs are typically used for simple two dimensional technical drawings. Vector oriented design programs use a design method based on lines, which together form representation of the desired structure. Solid oriented design programs are typically used for three dimensional structures. This type of design programs use a method with three dimensional solid elements, which are combined or subtracted from each other to result in a three dimensional solid representation of the desired structure.

The disadvantage of such design programs is that they are suited for a wide variety of structures. As a result such programs have an abundance of possibilities, which require a long study before such design programs can be used effectively.

Designing tube frames with these prior art design programs is possible. However, as the design programs have an abundance of possibilities, it is possible to design a particular tube frame in a large number of ways.

A particular tube frame can be designed in a number of ways, such that it is difficult to predict how a tube frame will have to be made. This prevents the automated manufacture of tube frames designed with prior art design method.

It is now an object of the invention to provide a method for designing a tube frame, which does not have the disadvantages of the prior art design programs and which enables the automated manufacture of designed tube frames.

This object is achieved with the method according to the invention, which method comprises the steps of:
- providing a selection of predefined tube parts, each tube part having at least one attachment zone;
- selecting a first tube part from the selection of predefined tube parts;
- selecting an attachment zone of the selected tube part;
- selecting a second tube part from the selection of predefined tube parts for connection to the selected attachment zone and connecting said second tube part at the selected attachment zone to the first tube part;
- repeating the steps of selecting an attachment zone of a tube part and selecting a further tube part in order to design a tube frame.

With the method according to the invention, a limited number of tube parts, with which a desired tube frame can be designed is provided. This limited choice makes it easier to use the method according to the invention.

The attachment zone of each tube part provides the possibility in the design process to limit the choices of connecting two tube parts. It also provides to possibility to impose some limitations to the design process which are required for the manufacturing process. For example the angle under which a first tube part can be connected to the second part can be limited by defining an attachment zone for a tube part.

In a preferred embodiment of the invention each tube part is at least defined by a colored-centerline, a length and a parameterized cross section. With the centerline the direction of a tube part is defined, while the parameterized cross section provides body to the tube part. With these parameters it is also possible to take into account the manufacturing limitations. It is for example to incorporate in the parameters, the available tube lengths, tube diameters and wall thicknesses.

In yet another preferred embodiment of the method of the invention the end of the centerline of at least one tube part is connected to the centerline of the other part upon connection of two tube parts. By connecting the centerline of connected tube parts a colored-centerline frame of the tube frame structure is achieved. This centerline frame provides a reference for calculating how a connection of two tube parts should be embodied.

Preferably the method according to the invention comprises the step of selecting a transition from a selection of predefined transitions, for adjusting the local shape of both tube parts at the attachment zone. With these transitions it is possible to define how two tube parts are connected to each other. With a transition it is for example possible to define that the end of a second tube part is inserted into a hole provided in a first tube part. With these transitions it is again possible to take into account the manufacturing limitations while designing a tube frame with the method according to the invention. Preferably, the invention makes it possible to the designer to pre-define his favorite pre-defined transitions who can be fully automatic inserted into the tube design according to the used tubes and angles.

In another embodiment according to the invention an attachment zone defines at least a direction for connecting a tube part.

In yet another embodiment of the invention an attachment zone defines the possible predefined transitions.

In a further preferred embodiment the method according to the invention, comprises the steps of:
- selecting a surface of a tube part of the tube frame;
- selecting a hole shape from a selection of designed or predefined holes;
- positioning the selected hole at the selected surface.

Besides connecting several tube portions it is with the method according to the invention also possible to define holes on the surfaces of the tube parts. In particular when the tube parts are manufactured by laser-, or other cutting methods , it is also possible to provide holes in the tubes. However, other manufacturing processes, such as sawing, drilling, grinding or milling can also be used to provide holes.

When using the method according the invention for designing a tube frame, it is possible to adjust the parameters of the selected hole shape.

The invention further relates to a software program implementing the method according to the invention. The method of the invention is in particular suitable to be implemented in a software program.

The invention also relates to a computer running a software program according to the invention.

These and other features of the invention will be elucidated in conjunction with the accompanying drawings.

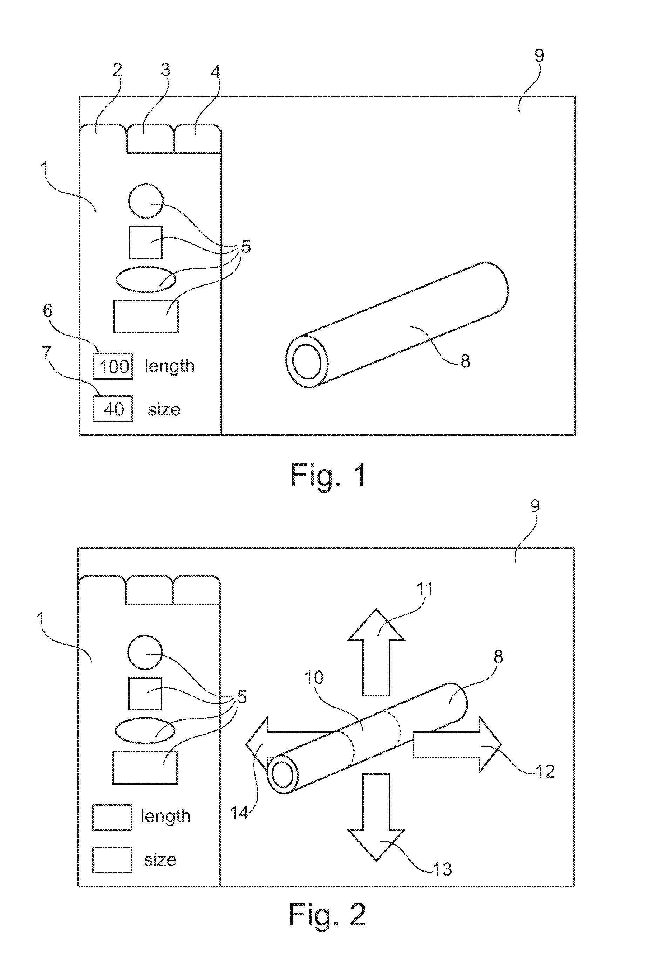

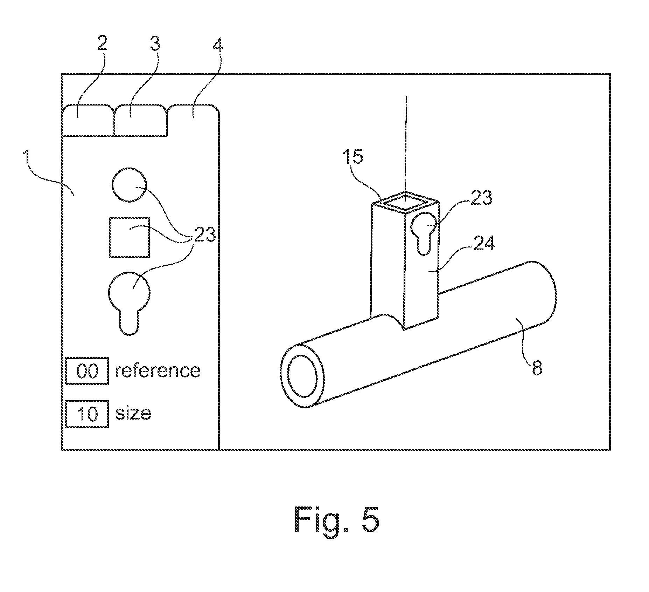

Figures 1 - 5 show schematic screen shots of a computer program in which an embodiment of the invention is implemented.

In figure 1 a first screen is shown having on the left side a menu 1 with three tabs 2, 3, 4. In this figure 1 the first tab 2 is selected. This first tab 2 shows four different tube parts 5, which can be used to design a tube frame. Under the four different cross sections of the tube parts 5, an input box 6 for entering the desired length of a selected tube part and an input box 7 for entering the desired profile-size of the selected tube part are present. The side of the tube which contains the welding seam can always be predefined in the design of the tube frame.

When a shape is selected and length and size of the tube part is entered, the tube part 8 can be positioned in a workspace 9, which is present on the right side of the screen and contains the colored-centerline.

After the first tube part 8 is positioned in the workspace 9, an attachment zone 10 of the tube part 8 is selected (see figure 2). The tube part 8 has a circular cross section of size 40 and length 100. When selecting the attachment zone 10, the possible directions 11, 12, 13, 14 are shown for attachment of a second tube. Place, directions and angles on the tube part 8 are free to implement. Simultaneously, the possible tube parts 5 for connection to the attachment zone 10 are shown in the menu 1. In this example all tube part shapes are possible, but in some cases it could be necessary to leave a shape out automatically, for example due to manufacturing and/or design limitations.

Next, a second tube part 15 is selected in the menu and attached to the direction 11 of the attachment zone 10 of the first tube part 8. The second tube part 15 has a square cross section of size 30 and length 70. The side of the tube which contains the welding seam can always be predefined in the design of the tube frame.

Each tube part 8, 15 has a colored-centerline 16, 17 respectively. These centerlines 16, 17 provide a reference for the interaction between tube parts 8, 15. Relative to these centerlines 16, 17 the size of the cross section is defined. When the second tube part 15 is attached to the first tube part 8 at the attachment zone 10, the end of the centerline 17 is connected to the centerline 16 at connection point 18.

Now the centerlines 16, 17 of the tube parts 8, 15 are connected at connection point 18, the computer program can calculate how the local shape must be at the transition zone in which the second tube part 15 abuts the first tube part 8.

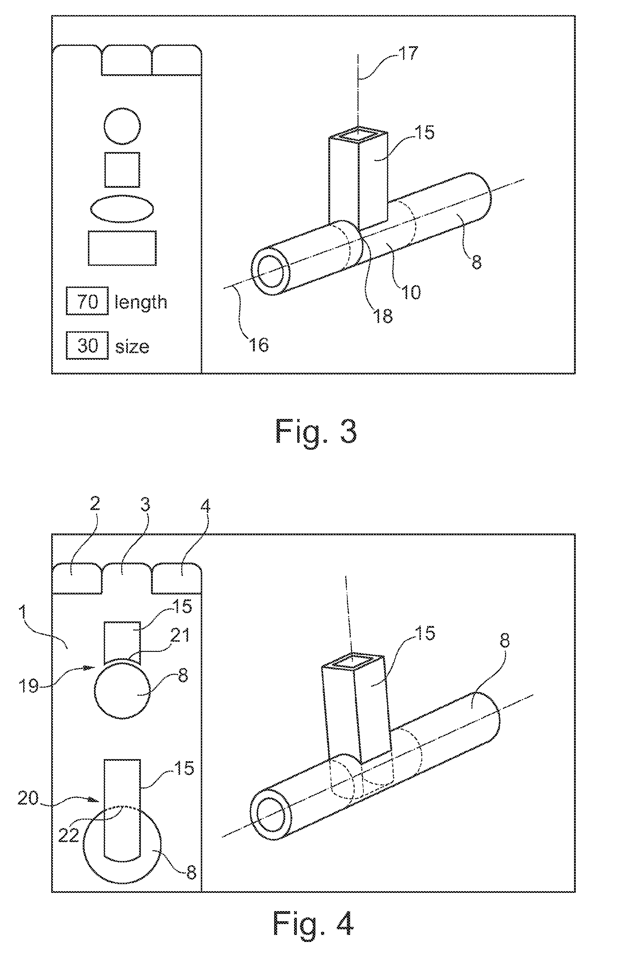

At this stage, the second tab 3 of the menu 1 is selected to select a desired transition. In figure 4 two different transitions 19, 20 are shown. With transition 19, the end of the second tube 15 is provided with a cavity 21, which corresponds with the shape of the outer wall of the first tube 8. With transition 20, a hole 22 is provided the first tube 8. The second tube part 15 extends into this hole 22 of the first tube 8.

The second transition 20 is now selected for the designed tube frame of tube part 8 and tube part 15. Based on this selection of the transition 20 and the connection point 18, the computer program can calculate the local shape at the transition of both the first tube part 8 and the second tube part 15.

As a last step in this example of an embodiment according to the invention, the third tab 4 of the menu 1 is selected. This third tab 4 shows a number of possible holes 23, which can be arranged at a desired surface of the tube parts 8, 15.

After selecting a hole shape 23 and entering the size and reference point for the shape, the hole 23 can be arranged on the surface 24 of the second tube part 15.

For manufacturing purposes it is necessary to define a reference for the hole 23. For example, when two similar hole shapes are to be arranged on opposite sides of a tube part with square cross section and be aligned, it is necessary that both hole shapes have the same reference point.

At all hole patterns which are placed on a side of a tube it is possible to connect a reference point which is related to the middle of the theoretical tube or to one of the sides of the theoretical tube. This is important during the cutting-process of the tube. The deviation in shape of the theoretical tube and the real tube can be taken into account during the cutting process.

A preferred method for manufacturing the tube frame designed with the method according to the invention is by laser cutting of tube lengths or by other cutting methods.

## Claims

1. Method for designing a tube frame out of a number of tube parts, the method comprising the steps of:
- providing a selection of predefined tube parts, each tube part having at least one attachment zone;
- selecting a first tube part from the selection of predefined tube parts;
- selecting an attachment zone of the selected tube part;
- selecting a second tube part from the selection of predefined tube parts for connection to the selected attachment zone and connecting said second tube part at the selected attachment zone to the first tube part;
- repeating the steps of selecting an attachment zone of a tube part and selecting a further tube part in order to design a tube frame.

2. Method according to claim 1, wherein each tube part is at least defined by a colored-centerline, a parameterized length and a parameterized cross section.

3. Method according to claim 2, wherein upon connection of two tube parts at an attachment zone, the end of the centerline of at least one tube part is connected to the centerline of the other tube part.

4. Method according to claim 3, further comprising the step of selecting a transition from a selection of predefined transitions, for adjusting the local shape of both tube parts at the attachment zone.

5. Method according to any of the preceding claims, wherein an attachment zone at least defines one or more directions for connecting a tube part.

6. Method according to claim 4 and 5, wherein an attachment zone defines the possible predefined transitions.

7. Method according to any of the preceding claims, comprising the steps of:
- selecting a surface of a tube part of the tube frame;
- selecting a hole shape from a selection of designed or predefined holes;
- positioning the selected hole at the selected surface.

8. Method according to claim 7 comprising the step of adjusting the parameters of the selected hole shape.

9. Software program implementing the method according to any of the preceding claims.

10. Computer running a software program according to claim 9.
